# EUROPÄISCHE PATENTSCHRIFT

(11) **EP 4 532 288 B1**
(45) Veröffentlichungstag und Bekanntmachung des Hinweises auf die Patenterteilung: **09.12.2026**
(21) Anmeldenummer: 23721765.8
(22) Anmeldetag: 02.05.2023
(51) Int. Cl.: B60W 60/00, G06N 3/09, B60W 50/00

(54) **TRAININGSVERFAHREN FÜR EIN FAHRASSISTENZSYSTEM ZUR AUTOMATISIERTEN QUERFÜHRUNG EINES KRAFTFAHRZEUGS**
TRAINING METHOD FOR A DRIVING ASSISTANCE SYSTEM FOR AN AUTOMATED LATERAL GUIDANCE OF A MOTOR VEHICLE
PROCÉDÉ D'ENTRAÎNEMENT POUR UN SYSTÈME D'AIDE À LA CONDUITE POUR UN GUIDAGE LATÉRAL AUTOMATISÉ D'UN VÉHICULE À MOTEUR

(30) Priorität: 25.05.2022 DE 102022113191
(43) Veröffentlichungstag der Anmeldung: 09.04.2025
(73) Patentinhaber: Bayerische Motoren Werke Aktiengesellschaft, 80809 München (DE)
(72) Erfinder: KAGERER, Walter, 80939 Muenchen (DE); LEHMEYER, Kathrin, 80637 München (DE); SPAETH, Andreas, 88131 Lindau (DE); HUEMER, Jakob, 80804 München (DE)
(86) Internationale Anmeldenummer: PCT/EP2023/061446
(87) Internationale Veröffentlichungsnummer: WO 2023/227328

(56) Entgegenhaltungen:
- DE-A1- 102017 123 848
- DE-A1- 102017 206 344
- US-A1- 2021 387 650

## Beschreibung

Die vorliegende Offenbarung betrifft ein Trainingsverfahren für ein Fahrassistenzsystem zur automatisierten Querführung eines Kraftfahrzeugs. Zusätzlich oder alternativ wird ein System zur Datenverarbeitung bzw. eine Datenverarbeitungsvorrichtung bereitgestellt, das bzw. die ausgestaltet ist, um das Verfahren zumindest teilweise auszuführen.

Zusätzlich oder alternativ wird ein Computerprogramm bereitgestellt, das Befehle umfasst, die bei der Ausführung des Programms durch einen Computer diesen veranlassen, das Verfahren auszuführen. Zusätzlich wird ein computerlesbares Medium bereitgestellt, das Befehle umfasst, die bei der Ausführung der Befehle durch einen Computer diesen veranlassen, das Verfahren auszuführen.

Aus der DE 10 2018 204 069 A1 ist ein Verfahren zum Betrieb eines Lenk- und/oder Spurführungsassistenten bekannt. Das Verfahren umfasst ein Ermitteln von Performancedaten bezüglich eines Performanceeinbruchs des Lenk- und/oder Spurführungsassistenten bei einer Vielzahl von Fahrten von ein oder mehreren ersten Fahrzeugen entlang einer Fahrstrecke, ein Zuordnen der Performancedaten zu Positionsdaten in Bezug auf eine Position entlang der Fahrstrecke, in Zusammenhang mit welcher der Performanceeinbruch jeweils erfolgt ist; ein Erkennen, auf Basis der Performancedaten und der Positionsdaten, einer Häufung von Performanceeinbrüchen des Lenk- und/oder Spurführungsassistenten an zumindest einer bestimmten Positionen der Fahrstrecke; und ein Ermitteln von Anpassungsdaten für eine Anpassung von zumindest einem Betriebsparameter und/oder von zumindest einer Randbedingung zum Betrieb des Lenk- und/oder Spurführungsassistenten für ein zweites Fahrzeug bei einer Fahrt des zweiten Fahrzeugs an der bestimmten Position der Fahrstrecke.

Dokument US 2021/387650 A1 offenbart ein Computersystem eines Fahrzeugs, das Wahrnehmungsdaten empfangen kann, die mit einem Szenario verbunden sind, auf das ein Fahrzeug beim Betrieb in einem autonomen Fahrmodus trifft. Das System kann das Szenario zumindest auf der Grundlage der Wahrnehmungsdaten identifizieren. Das System kann eine Leistungsmetrik erzeugen, die mit einem Fahrzeugnavigationsplan verbunden ist, um das Fahrzeug in Übereinstimmung mit dem identifizierten Szenario zu navigieren. Als Reaktion auf die Feststellung, dass die dem Fahrzeugnavigationsplan zugeordnete Leistungskennzahl ein oder mehrere Kriterien für die Navigation des Fahrzeugs gemäß dem identifizierten Szenario nicht erfüllt, kann das System einen Auskupplungsvorgang auslösen, der sich auf das Auskuppeln des Fahrzeugs aus dem autonomen Fahrmodus bezieht. Das System kann einen Deaktivierungssatz erzeugen, der mit der ausgelösten Deaktivierungsoperation verbunden ist. Der Auskupplungsdatensatz kann Informationen enthalten, die mit dem identifizierten Szenario verbunden sind, auf das das Fahrzeug im Zusammenhang mit dem Auskupplungsvorgang gestoßen ist.

Dokument DE 10 2017 123 848 A1 offenbart ein automatische Parken eines Fahrzeugs auf einem Parkplatz mit den folgenden Schritten: manuelles Fahren des Fahrzeugs auf den Parkplatz in einem Trainingsschritt, und anschließendes automatisches Fahren des Fahrzeugs auf den Parkplatz in einem Wiedergabeschritt, wobei der Schritt zum manuellen Fahren des Fahrzeugs auf den Parkplatz die folgenden Unterschritte aufweist: Erfassen von Information über Merkmale der Umgebung des Fahrzeugs, die der gefahrenen Trajektorie entsprechen, Abgleichen von Merkmaldeskriptoren der erfassten Merkmale der Umgebung mit den in der digitalen Karte gespeicherten Merkmaldeskriptoren, und erneutes Lokalisieren des Fahrzeugs bezüglich der in der digitalen Karte gespeicherten Trajektorie, um das Fahrzeug entlang der gespeicherten Trajektorie auf den Parkplatz zu navigieren, gekennzeichnet durch mehrmaliges Wiederholen des Schritts zum automatischen Fahren des Fahrzeugs auf den Parkplatz, wobei die Schritte zum automatischen Fahren des Fahrzeugs auf den Parkplatz jeweils die folgenden Unterschritte aufweisen: Zählen der Übereinstimmungen der Merkmaldeskriptoren der erfassten Merkmale der Umgebung mit den in der digitalen Karte gespeicherten Merkmaldeskriptoren für jeden Merkmaldeskriptor, und- Löschen eines in der digitalen Karte gespeicherten Merkmaldeskriptors, wenn die Anzahl von Übereinstimmungen für diesen Merkmaldeskriptor nach einer vorgegebenen Anzahl von Wiederholungen des Schritts zum automatischen Fahren des Fahrzeugs auf den Parkplatz einen vorgegebenen Schwellenwert nicht überschreitet.

Dokument DE 10 2017 206 344 A1 offenbart ein Fahrerassistenzsystem für ein Fahrzeug, insbesondere eines höher automatisierten Fahrzeugs (HAF), umfassend eine Erfassungseinrichtung zum Erfassen von Informationen in einem Fahrzeugumfeld. Ferner umfasst das Fahrerassistenzsystem eine Positionsbestimmungseinrichtung zum Bestimmen einer Fahrzeugposition relativ zu dem Fahrzeugumfeld sowie eine Datenbank, wobei die Datenbank eine digitale Straßenkarte umfasst, und eine Steuereinheit, wobei die Steuereinheit dazu eingerichtet ist, die Fahrzeugposition in der digitalen Karte zu lokalisieren und an der Fahrzeugposition geltende Verkehrsregeln zu ermitteln, Dabei ist die Ermittlung der geltenden Verkehrsregeln zumindest teilweise unter Verwendung von durch die Erfassungseinrichtung erfassten ersten Informationen und/oder unter Verwendung von in der Datenbank hinterlegten Karteninformationen erfolgt. Erfindungsgemäß wird vorgeschlagen, dass die Steuereinheit weiterhin dazu eingerichtet ist, von der Erfassungseinrichtung erfasste zweite Informationen dahingehend auszuwerten, ob die an der Fahrzeugposition maßgeblichen Verkehrsregeln von anderen Verkehrsteilnehmern eingehalten werden oder ob die anderen Verkehrsteilnehmer anstelle der maßgeblichen Verkehrsregeln alternative Verkehrsregeln befolgen.

Meist sind an Mautstationen solche Stellen, an denen ein Performanceeinbruch eines Fahrassistenzsystems zur automatisierten Querführung eines Kraftfahrzeugs festgestellt werden kann. Mautstellen weisen auf einem gewissen Teil der Strecke oftmals keine Spurmarkierungen auf. Fahrassistenzsysteme zur automatisierten Querführung orientieren sich jedoch meist an Spurmarkierungen, um diesen zu folgen. Solche Fahrassistenzsysteme können daher nur eine eingeschränkte bzw. kurze Strecken ohne Spurmarkierungen, z.B. unter Nutzung einer Bahn von vorausfahrenden Fahrzeugen, überbrücken. Damit kommt es bei Mautstationen bei solchen Fahrassistenzsysteme meist zu einem Beenden der automatisierten Querführung und ein Fahrer muss die Querführung manuell übernehmen, d.h. selbst lenken.

In Karten sind Mautstationen kartiert, aber nur die Örtlichkeit der Mautstation und die auf der Straße markierten Spuren. Auch hiermit ist keine durchgängige Querführung möglich. Zudem kann zwar im Kraftfahrzeug konfiguriert werden, welche Bezahlsysteme das Kraftfahrzeug nutzen kann. Es ist derzeit aber nicht bekannt, welche Bezahlsysteme an welchen Spuren angeboten werden bzw. welche anderen Restriktionen vorliegen (z.B. Höhenbeschränkung), sodass das Kraftfahrzeug nicht bestimmen kann, welche Spuren es nutzen kann bzw. soll.

Das heißt, aktuell liegt bei Mautstationen keine Führungsgröße für das querführende Fahrassistenzsystem vor, so dass dieses bei einer Durchfahrung der Mautstelle abschalten muss. Außerdem ist unklar, welche Spuren der Mautstelle für das Kraftfahrzeug nutzbar sind.

Vor dem Hintergrund dieses Standes der Technik besteht die Aufgabe der vorliegenden Offenbarung darin, eine Vorrichtung und ein Verfahren anzugeben, welche jeweils geeignet ist, zumindest den oben beschriebenen Stand der Technik zu bereichern. Insbesondere soll eine Möglichkeit dafür beschrieben werden, Mautstationen auch ohne vorausfahrendes Fahrzeug mit automatisierter Querführung durchfahren zu können.

Gelöst wird die Aufgabe durch die Merkmale der unabhängigen Ansprüche. Die Unteransprüche haben bevorzugte Weiterbildungen der Erfindung zum Inhalt.

Unter einem Fahrassistenzsystem kann eine Einrichtung in dem Kraftfahrzeug zur Unterstützung des Fahrers in bestimmten Fahrsituationen verstanden werden. Das Fahrassistenzsystem kann neben Hardware-Komponenten auch Software-Komponenten aufweisen.

Das Fahrassistenzsystem zur automatisierten Querführung kann ausgestaltet sein, um aktive Eingriffe in eine Querführung des Kraftfahrzeugs vorzunehmen, um das Kraftfahrzeug so in einer Mitte einer (Fahr-) Spur zu halten. Das Fahrassistenzsystem kann auch als Lenk- und/oder Spurführungsassistent bezeichnet werden.

Unter einem Trainingsverfahren kann ein Verfahren verstanden werden, bei dem das zu trainierende Fahrassistenzsystem angelernt wird bzw. in seiner Funktionalität erweitert wird. Das heißt, das Fahrassistenzsystem wird mittels des Verfahrens so verändert, dass es in Fahrsituationen verfügbar bzw. einsetzbar ist, in denen es vor dem Durchführen des Verfahrens nicht (oder nicht in diesem Umfang) einsetzbar war.

Bei dem Verfahren kann es sich um ein computer-implementiertes Verfahren handeln, d.h. einer oder mehrere oder alle Schritte des Verfahrens können zumindest teilweise mittels eines Computers bzw. eines Systems zur Datenverarbeitung durchgeführt werden.

Das Trainingsverfahren umfasst ein Aufzeichnen einer Trajektorie des Kraftfahrzeugs bei einem Durchfahren eines Abschnitts mit deaktiviertem Fahrassistenzsystem zur automatisierten Querführung, der von dem Fahrassistenzsystem zur automatisierten Querführung nicht bewältigbar ist.

Denkbar ist, dass das Fahrassistenzsystem Fahrbahnmarkierungen nutzt, um das Kraftfahrzeug in oben beschriebener Weise in der Mitte der Fahrspur zu halten. Bei dem Abschnitt, der auch als Bereich bezeichnet werden kann, kann es sich um einen Streckenabschnitt handeln, der keine Fahrbahnmarkierung(en) bzw. Spurmarkierung(en) aufweist. Folglich kann das Fahrassistenzsystem in einem solchen Bereich, der keine Fahrbahnmarkierung(en) aufweist, vor dem Durchführen des Trainingsverfahrens nicht genutzt werden.

Unter einer Trajektorie kann ein Pfad verstanden werden, entlang dem sich das Kraftfahrzeug durch den Abschnitt bewegt bzw. bewegt hat. Denkbar ist, dass die Trajektorie neben Positionsinformationen auch eine zeitliche Komponente aufweist, d.h. wann war das Kraftfahrzeug wo und/oder mit welcher Geschwindigkeit und/oder Beschleunigung ist das Kraftfahrzeug an welcher Position gefahren.

Das Aufzeichnen der Trajektorie kann ein Speichern der Trajektorie, z.B. in dem Kraftfahrzeug, umfassen. Das Aufzeichnen der Trajektorie kann mittels einem Sensorsystem, z.B. umfassend eine Kamera, einen LiDAR-Sensor, einen Ultraschallsensor, einen Raddrehzahlsensoren, einen Beschleunigungssensor, einen Gierratensensoren und/oder einen Radarsensor, erfolgen.

Die Trajektorie kann auch als eine Bewegungsbahn des Kraftfahrzeuges definiert werden. Diese kann über Bewegungssensoren des Kraftfahrzeugs, z.B. also dem Raddrehzahlsensoren, dem Beschleunigungssensor und/oder dem Gierratensensor, erfasst werden. Um diese Trajektorie in der Realität zu verorten, kann das Kraftfahrzeug positioniert werden. Dies kann über ein GNSS-System bzw. zusätzlich oder alternativ auch über Landmarken erfolgen, die z.B. über die genannten Umfeldsensorik (z.B. Kamera, LiDAR-Sensor, Ultraschallsensor und/oder Radarsensor) erfasst werden können.

Zudem kann aufgezeichnet werden, welches Bezahlsystem das Kraftfahrzeug beim Durchfahren des Abschnitts nutzt und/oder ob andere Restriktionen vorliegen (z.B. Höhenbeschränkung) vorliegen.

Denkbar ist auch, dass beim Durchfahren bzw. Aufzeichnen der Trajektorie mit Hilfe der Umfeldsensorik ein Freiraum bzw. eine Fahrbahnbreite aufgezeichnet, z.B. eine Breite einer Gasse zum Durchfahren des Abschnitts, aufgezeichnet wird. Diese kann beim späteren automatisierten Durchfahren des Abschnitts mit dem trainierten Fahrassistenzsystem zum Bestimmen einer Geschwindigkeit des Kraftfahrzeugs genutzt werden, d.h. es kann damit eine Geschwindigkeit auf ein für diese Fahrbahnbreite, insbesondere Breite der Gasse, passende Geschwindigkeit angepasst werden.

Das Trainingsverfahren umfasst ferner ein Trainieren des Fahrassistenzsystems zur automatisierten Querführung basierend auf der aufgezeichneten Trajektorie, sodass der Abschnitt für das Fahrassistenzsystem zur automatisierten Querführung nach dem Trainieren bewältigbar ist.

Dabei ist das Trainingsverfahren nicht auf eine Durchfahrung des Abschnitts limitiert, sondern es können auch mehrere Durchfahrungen vorgenommen werden. Das heißt es können mehrere Trajektorien aufgezeichnet werden und diese mehreren Trajektorien können zum Trainieren des Fahrassistenzsystems genutzt werden.

Das Trainingsverfahren bietet den Vorteil, dass eine Funktionserweiterung des Fahrassistenzsystems vorgenommen werden kann, sodass dieses nach dem Trainingsverfahren in Fahrsituationen bzw. auf (Strecken-) Abschnitten verwendet werden kann, in denen es vor dem Trainingsverfahren nicht verwendet werden konnte. Das Kraftfahrzeug kann damit nach dem Trainingsverfahren bestimmen, welchen Pfad bzw. welche Trajektorie es nutzen kann bzw. soll. Dabei kann das Verfahren vom Kraftfahrzeug selbst durchgeführt werden und/oder gestützt durch die Daten mehrerer Fahrzeuge in einer Cloud erfolgen, d.h. für die Funktionserweiterung ist dafür keine menschliche Entwicklungsarbeit zu leisten. Zudem ist denkbar, dass auch Fahrassistenzsysteme weiterer Kraftfahrzeuge, z.B. über Car-to-Car Kommunikation und/oder über eine Cloud (z.B. over-the-air update und/oder oder Fahrzeug-zu-Infrastruktur-Übertragung), das verbesserte Fahrassistenzsystem erhalten. Nachfolgend werden mögliche Weiterbildungen des oben beschriebenen Verfahrens im Detail erläutert.

Das Trainingsverfahren kann ein Feststellen, dass der Abschnitt auf einer geplanten Route des Kraftfahrzeugs in einem vorbestimmten Abstand zu dem Kraftfahrzeug liegt, der von dem Fahrassistenzsystem zur automatisierten Querführung nicht bewältigbar ist, ein Fahren des Kraftfahrzeugs mit aktiviertem Fahrassistenzsystem zur automatisierten Querführung zu dem Zeitpunkt des Feststellens, dass der Abschnitt auf der geplanten Route des Kraftfahrzeugs in dem vorbestimmten Abstand zu dem Kraftfahrzeug liegt, der von dem Fahrassistenzsystem zur automatisierten Querführung nicht bewältigbar ist, und ein Deaktivieren des Fahrassistenzsystem zur automatisierten Querführung unter Ausgabe einer Übernahmeaufforderung mittels dem Kraftfahrzeug, bevor der Abschnitt vom dem Kraftfahrzeug erreicht wird, umfassen.

Erfindungsgemäß umfasst das Trainingsverfahren ein Aufzeichnen einer weiteren Trajektorie eines weiteren Kraftfahrzeugs bei dem Durchfahren des Abschnitts mit deaktiviertem Fahrassistenzsystem zur automatisierten Querführung, und ein Trainieren des Fahrassistenzsystems zur automatisierten Querführung basierend auf der weiteren aufgezeichneten Trajektorie, sodass der Abschnitt für das Fahrassistenzsystem zur automatisierten Querführung nach dem Trainieren bewältigbar ist**.**

Erfindungsgemäß umfasst das Trainingsverfahren ein Plausibilisieren der Trajektorie des Kraftfahrzeugs mit der Trajektorie des weiteren Kraftfahrzeugs, und ein Trainieren des Fahrassistenzsystems zur automatisierten Querführung basierend auf der plausibilisierten Trajektorie des Kraftfahrzeugs, sodass der Abschnitt für das Fahrassistenzsystem zur automatisierten Querführung nach dem Trainieren bewältigbar ist.

Das Trainieren des Fahrassistenzsystems zur automatisierten Querführung kann ein Festlegen einer Durchfahrtstrajektorie bzw. Durchfahrungstrajektorie für den Abschnitt ausgehend von einer ersten vorbestimmten Fahrspur zu einer zweiten vorbestimmten Fahrspur umfassen.

Mit anderen Worten, anstatt der Fahrbahnmarkeirungen kann von dem Fahrassistenzsystem nun eine festgelegte Trajektorie, die sog. Durchfahrtstrajektorie, als Führungsgröße genutzt werden, entlang welcher das Kraftfahrzeug in dem Abschnitt, gesteuert durch das Fahrassistenzsystem, fahren soll bzw. kann.

Ferner betrifft die Offenbarung eine Verwendung des mit dem oben beschriebenen Trainingsverfahren trainierten Fahrassistenzsystems zur Steuerung einer Querführung eines Kraftfahrzeugs.

Dabei kann vor und/oder während einem Durchfahren des Abschnitts mittels dem Fahrassistenzsystem überprüft werden, ob sich im Vergleich zu einem Zeitpunkt des Trainierens des Fahrassistenzsystems eine Umgebung (z.B. Höhenbeschränkungen, Bezahlsystem usw.) und/oder ein Zustand des Kraftfahrzeugs (z.B. Fahren mit oder ohne Hänger) in vorbestimmter Weise verändert hat, und falls sich im Vergleich zu dem Zeitpunkt des Trainierens des Fahrassistenzsystems die Umgebung und/oder der Zustand des Kraftfahrzeugs in vorbestimmter Weise verändert hat, das Fahrassistenzsystem nicht verwendet werden.

Das oben mit Bezug zum Trainingsverfahren Beschriebene gilt analog auch für die Verwendung und umgekehrt.

Das oben Beschriebene lässt sich mit anderen Worten und auf eine konkrete Ausgestaltung bezogen, die als für die vorliegende Offenbarung nicht limitierend beschrieben wird, wie folgt zusammenfassen:
Einem Fahrer eines Kraftfahrzeugs kann angezeigt werden, dass vor ihm ein Abschnitt, z.B. eine Mautstation, ist, dieser aber (noch) nicht durchfahren werden kann.

Dem Fahrer kann daraufhin angeboten werden, den Abschnitt bzw. insbesondere die Mautstation durch ein- oder mehrmaliges manuelles Durchfahren dem System anzulernen.

Wenn der Fahrer manuell durch den Abschnitt bzw. insbesondere die Mautstation fährt, dann kann das Fahrassistenzsystem eine gefahrene Trajektorie zusammen mit einer Information über eine Ausgangsspur (d.h. eine Fahrspur, auf der sich das Kraftfahrzeug vor Erreichen des Abschnittes befindet), eine gewählte Zielspur (d.h. eine Fahrspur, auf der sich das Kraftfahrzeug nach dem Abschnitt befindet), und den Weg, den der Fahrer gefahren ist (sog. Trajektorie) speichern. Dabei kann auch abgespeichert werden, welche Straßenbegrenzungen in bzw. an dem Abschnitt vorhanden sind, welche Trajektorien andere Fahrzeuge genommen haben und/oder ob das Kraftfahrzeug den Abschnitt mit oder ohne Bezahlstopp durchfahren konnte und optional welches fahrzeugintegrierte Bezahlsystem genutzt wurde.

Wurden nach ein- oder mehrmaligen Durchfahrten des Abschnitts mit dem Kraftfahrzeug ausreichend viele und/oder genaue Daten gesammelt, dann kann mit den eigenen Trajektorien und ggf. zusätzlich mit den Trajektorien der anderen Fahrzeuge eine Karte erstellt werden, in der die Trajektorien gegeneinander plausibilisiert werden.

Ist eine ausreichend plausible Trajektorie, die auch als Durchfahrtsspur bezeichnet werden kann, von der aktuellen Ausgangsspur zu der Zielspur vorhanden, dann kann dies von dem Fahrassistenzsystem genutzt werden, um das Kraftfahrzeug durch den Abschnitt zu steuern.

Wenn eine ausreichend plausible Trajektorien gelernt wurde, dann ist zusätzlich oder alternativ denkbar, diese in eine Cloud zu laden und anderen bzw. weiteren Fahrzeugen, z.B. über einen Onlinedienst und/oder über eine verbesserte bzw. aktualisierte Kartenversion, zur Verfügung zu stellen.

In einer möglichen Ausgestaltung ist denkbar, dass das Fahrassistenzsystem dem Fahrer in einem vorbestimmten Abstand vor dem Abschnitt anbietet, das Kraftfahrzeug geführt durch den Abschnitt zu fahren. Der Fahrer kann dies bestätigen oder ablehnen und das Fahrassistenzsystem weiter anlernen. Denkbar ist aber auch, dass von einer guten Anlernqualität ausgegangen und die Bestätigung vor der Mautstation durch den Fahrer kann entfallen, wenn das Kraftfahrzeug mehrfach ohne Fahrereingriff durch den Abschnitt gefahren ist.

In einer weiteren möglichen, zusätzlichen oder alternativen, Ausgestaltung ist denkbar, dass Änderungen am Fahrzeug (sog. Zustand des Kraftfahrzeugs), wie z.B. ein angehängter Hänger, oder eine Änderung einer Infrastruktur (sog. Umgebung), wie z.B. eine weggefallene Bezahlmöglichkeit, die aber zuvor an dieser Spur genutzt wurde, können dazu führen, dass die gelernten bzw. in oben beschriebener Weise bestimmte Durchfahrtsspur verworfen wird.

Ferner wird ein System gemäß Anspruch 6 bereitgestellt.

Das System kann eine Datenverarbeitungsvorrichtung im einem Fahrzeug umfassen. Dabei kann es sich beispielsweise um eine elektronische Steuereinheit bzw. Steuergerät (engl. ECU = electronic control unit) handeln. Das elektronische Steuergerät kann eine intelligente prozessor-gesteuerte Einheit sein, die z.B. über ein Central Gateway (CGW) mit anderen Modulen kommunizieren kann und die ggf. über Feldbusse, wie den CAN-Bus, LIN-Bus, MOST-Bus und FlexRay oder über Automotive-Ethernet, z.B. zusammen mit Telematiksteuergeräten, das Fahrzeugbordnetz bilden kann. Denkbar ist, dass das Steuergerät für das Fahrverhalten des Kraftfahrzeugs relevante Funktionen, wie die Motorsteuerung, die Kraftübertragung, das Bremssystem und/oder das Reifendruck-Kontrollsystem, steuert und/oder auf die für relevanten Daten zugreifen kann. Außerdem können Fahrerassistenzsysteme, wie beispielsweise ein Parkassistent, eine angepasste Geschwindigkeitsregelung (ACC, engl. adaptive cruise control), ein Spurhalteassistent, ein Spurwechselassistent, eine Verkehrszeichenerkennung, eine Lichtsignalerkennung, ein Anfahrassistent, ein Nachtsichtassistent, einen Notbremsassistenten und/oder ein Kreuzungsassistent, von dem Steuergerät gesteuert werden und/oder auf die für relevanten Daten zugriffen werden.

Ferner kann ein Fahrzeug, ein (insbesondere automatisiertes) Kraftfahrzeug, mit der Datenverarbeitungsvorrichtung bereitgestellt werden. Das Fahrzeug zeichnet sich dadurch aus, dass dieses die Datenverarbeitungsvorrichtung aufweist.

Bei dem Kraftfahrzeug kann es sich um einen Personenkraftwagen, insbesondere ein Automobil, und/oder ein Nutzfahrzeug handeln. Das automatisierte Kraftfahrzeug kann ausgestaltet sein, um eine Längsführung und/oder eine Querführung bei einem automatisierten Fahren des Kraftfahrzeugs zumindest teilweise und/oder zumindest zeitweise zu übernehmen. Das automatisierte Fahren kann so erfolgen, dass die Fortbewegung des Kraftfahrzeugs (weitgehend) autonom erfolgt. Das automatisierte Fahren kann zumindest teilweise und/oder zeitweise durch die Datenverarbeitungsvorrichtung gesteuert werden.

Das Kraftfahrzeug kann ein Kraftfahrzeug der Autonomiestufe 0 sein, d.h. der Fahrer übernimmt die dynamische Fahraufgabe, auch wenn unterstützende Systeme (z. B. ABS oder ESP) vorhanden sind.

Das Kraftfahrzeug kann ein Kraftfahrzeug der Autonomiestufe 1 sein, d.h. bestimmte Fahrerassistenzsysteme aufweisen, die den Fahrer bei der Fahrzeugbedienung unterstützen, wie beispielsweise der Abstandsregeltempomat (ACC).

Das Kraftfahrzeug kann ein Kraftfahrzeug der Autonomiestufe 2 sein, d.h. so teilautomatisiert sein, dass Funktionen wie automatisches Einparken, Spurhalten bzw. Querführung, allgemeine Längsführung, Beschleunigen und/oder Abbremsen von Fahrerassistenzsystemen übernommen werden.

Das Kraftfahrzeug kann ein Kraftfahrzeug der Autonomiestufe 3 sein, d.h. so bedingungsautomatisiert, dass der Fahrer das System Fahrzeug nicht durchgehend überwachen muss. Das Kraftfahrzeug führt selbstständig Funktionen wie das Auslösen des Blinkers, Spurwechsel und/oder Spurhalten durch. Der Fahrer kann sich anderen Dingen zuwenden, wird aber bei Bedarf innerhalb einer Vorwarnzeit vom System aufgefordert die Führung zu übernehmen.

Das Kraftfahrzeug kann ein Kraftfahrzeug der Autonomiestufe 4 sein, d.h. so hochautomatisiert, dass die Führung des Fahrzeugs dauerhaft vom System Fahrzeug übernommen wird. Werden die Fahraufgaben vom System nicht mehr bewältigt, kann der Fahrer aufgefordert werden, die Führung zu übernehmen.

Das Kraftfahrzeug kann ein Kraftfahrzeug der Autonomiestufe 5 sein, d.h. so vollautomatisiert, dass der Fahrer zum Erfüllen der Fahraufgabe nicht erforderlich ist. Außer dem Festlegen des Ziels und dem Starten des Systems ist kein menschliches Eingreifen erforderlich.

Denkbar ist, dass die Datenverarbeitungsvorrichtung des Kraftfahrzeugs basierend auf einer Ausgabe eines Sensorsystems die Daten gemäß der Vorgabe sammelt und zu der ersten und/oder der zweiten Cloudkomponente ausgibt.

Unter einer Cloudkomponente kann ein Teil einer Cloud verstanden werden. Unter einer Cloud kann ein System umfassend eine oder mehrere Datenverarbeitungsvorrichtungen verstanden werden, das insbesondere drahtlos zu dem Fahrzeug verbunden oder verbindbar ist.

Das oben mit Bezug zu den Verfahren Beschriebene gilt analog auch für das System zur Datenverarbeitung und umgekehrt.

Ferner wird ein Computerprogramm bereitgestellt. Das Computerprogramm zeichnet sich dadurch aus, dass dieses Befehle umfasst, die bei der Ausführung des Programms durch einen Computer diesen veranlassen, zumindest eines der oben beschriebenen Verfahren zumindest teilweise auszuführen.

Ein Programmcode des Computerprogramms kann in einem beliebigen Code vorliegen, insbesondere in einem Code, der für Steuerungen von Kraftfahrzeugen geeignet ist.

Ferner wird ein computerlesbares Medium, insbesondere ein computerlesbares Speichermedium, bereitgestellt. Das computerlesbare Medium zeichnet sich dadurch aus, dass diese Befehle umfasst, die bei der Ausführung des Programms durch einen Computer diesen veranlassen, zumindest eines der oben beschriebenen Verfahren zumindest teilweise auszuführen.

Das heißt, es kann ein computerlesbares Medium bereitgestellt werden, das ein oben definiertes Computerprogramm umfasst. Bei dem computerlesbaren Medium kann es sich um ein beliebiges digitales Datenspeichergerät handeln, wie zum Beispiel einen USB-Stick, eine Festplatte, eine CD-ROM, eine SD-Karte oder eine SSD-Karte. Das Computerprogramm muss nicht zwingend auf einem solchen computerlesbarem Speichermedium gespeichert sein, um dem Kraftfahrzeug zur Verfügung gestellt zu werden, sondern kann auch über das Internet oder anderweitig extern bezogen werden.

Das oben mit Bezug zu den Verfahren und zum System zur Datenverarbeitung Beschriebene gilt analog auch für das Computerprogramm sowie das computerlesbare Medium und umgekehrt.

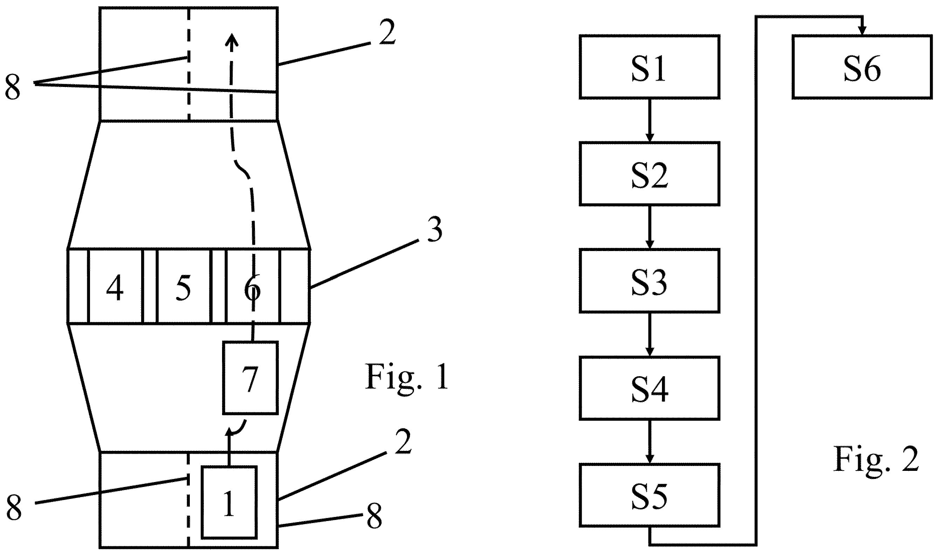

Nachfolgend wird eine Ausführungsform mit Bezug zu Figuren 1 und 2 beschrieben.
- Fig. 1: zeigt schematisch Kraftfahrzeug, das ausgestaltet ist, um ein Trainingsverfahren für ein Fahrassistenzsystem zur automatisierten Querführung eines Kraftfahrzeugs, sowie dessen Verwendung in einem Kraftfahrzeug auszuführen, und
- Fig. 2: zeigt schematisch ein Ablaufdiagramm des Trainingsverfahrens.

In Figur 1 ist eine Fahrsituation schematisch in einer Draufsicht dargestellt, bei der sich ein Kraftfahrzeug 1 auf einer Straße 2 mit Fahrspurmarkierungen 8 befindet und sich mit aktivierten Fahrassistenzsystem zur automatisierten Querführung hinter einem vorausfahrenden Fahrzeug 7 auf eine Mautstelle 3 zu bewegt, die drei Durchfahrungen 4, 5, 6 aufweist. Im Bereich der Straße 2 nutzt das Fahrassistenzsystem die Fahrspurmarkierungen 8, um die Position des Kraftfahrzeugs 1 in einer Fahrspur zu bestimmen und das Kraftfahrzeug 1 durch Lenkeingriffe in der Fahrspur zu halten. Da die Mautstelle 3 keine Fahrspurmarkierungen aufweist, ist diese eine Abschnitt, der von dem Fahrassistenzsystem zur automatisierten Querführung nicht bewältigbar ist. Um dies zu verbessern, wird das Trainingsverfahren für das Fahrassistenzsystem, dessen Ablaufdiagramm links in Figur 2 dargestellt ist und das die Schritte S1 - S... aufweist, von dem Kraftfahrzeug 1 durchgeführt.

In einem ersten Schritt S1 des Trainingsverfahren erfolgt mittels Kartendaten ein Feststellen, dass die Mautstelle 3, die von dem Fahrassistenzsystem zur automatisierten Querführung (zu diesem Zeitpunkt noch) nicht bewältigbar ist, auf einer geplanten Route des Kraftfahrzeugs 1 (s. auch Richtungsfeil in Figur 1) in einem vorbestimmten Abstand zu dem Kraftfahrzeug 1 liegt. Zu dem Zeitpunkt des Feststellens, dass sich die Mautstelle 3 vor dem Kraftfahrzeug 1 befindet, ist das Fahrassistenzsystem zur automatisierten Querführung aktiviert.

In einem zweiten Schritt S2 des Trainingsverfahren erfolgt ein Deaktivieren des Fahrassistenzsystem zur automatisierten Querführung unter Ausgabe einer Übernahmeaufforderung mittels des Kraftfahrzeugs bevor die Mautstelle 3 vom dem Kraftfahrzeug 1 erreicht wird.

Der Fahrer übernimmt nun die Steuerung der Querführung und lenkt das Kraftfahrzeug 1 durch die Mautstelle 3, sodass dieses die Mautstelle 3 mit deaktiviertem Fahrassistenzsystem zur automatisierten Querführung durchfährt.

In einem dritten Schritt S3 des Trainingsverfahren erfolgt ein Erfassen und Aufzeichnen einer Trajektorie des Kraftfahrzeugs 1 bei einem Durchfahren der Mautstelle 3 mit deaktiviertem Fahrassistenzsystem zur automatisierten Querführung.

Ferner erfolgt ein Erfassen und Aufzeichnen einer Trajektorie des vorausfahrenden Kraftfahrzeugs 7 bei dem Durchfahren des Abschnitts mit deaktiviertem Fahrassistenzsystem zur automatisierten Querführung. Zudem erfolgt vor und/oder während dem Durchfahren der Mautstelle 3 ein Erfassen und Aufzeichnen einer Umgebung (z.B. welches Zahlungssystem wird beim Durchfahren der Mautstelle 3 genutzt) und/oder eines Zustands des Kraftfahrzeugs (z.B. wird ein Anhänger beim Durchfahren gezogen).

In einem vierten Schritt S4 des Trainingsverfahren erfolgt ein Plausibilisieren, insbesondere vergleichen, der aufgezeichneten Trajektorie des Kraftfahrzeugs 1 mit der aufgezeichneten Trajektorie des vorausfahrenden Kraftfahrzeugs 7. Im vorliegenden Fall bewegen sich beide Kraftfahrzeuge 1, 7 durch dieselbe Durchfahrung 6 der Mautstelle 3 entlang im Wesentlichen derselben Trajektorie, wie durch die gestrichelte Linie angedeutet, sodass diese Trajektorie als plausibel eingestuft wird. Die Schritte S3 und S4 können dabei wiederholt für dieselbe Mautstelle 3 von dem Kraftfahrzeug 1 durchgeführt werden.

In einem fünften Schritt S5 des Trainingsverfahren erfolgt ein Trainieren des Fahrassistenzsystems zur automatisierten Querführung basierend auf der plausibilisierten Trajektorie des Kraftfahrzeugs 1, bei dem die mittels der Schritte S3 und S4 gewonnene und plausibilisierte Trajektorie als Durchfahrungstrajektorie für die recht Fahrspur der Straße 2 als Ausgangsfahrspur und Zielfahrspur festgelegt bzw. im Fahrassistenzsystem hinterlegt wird. Die Mautstelle 3 kann nun durch automatisiertes Folgen der Durchfahrungstrajektorie mittels dem Fahrassistenzsystem durchfahren werden, sodass diese nun als bewältigbarer Abschnitt gilt.

Folglich erfolgt in dem Schritt S6 der Verwendung (s. rechts Seite in Figur 2) des mit dem obigen Trainingsverfahren trainierten Fahrassistenzsystems ein Durchfahren der Mautstelle 3, wobei das Fahrassistenzsystem dabei die Steuerung der Querführung des Kraftfahrzeugs 1 so übernimmt, dass dieses der Durchfahrungstrajektorie folgt. Dabei wird vor und/oder während dem Durchfahren der Mautstelle 3 mittels dem aktivierten Fahrassistenzsystem überprüft wird, ob sich im Vergleich zu einem Zeitpunkt des Trainierens des Fahrassistenzsystems (s. Schritt S3) die Umgebung und/oder der Zustand des Fahrzeugs in vorbestimmter Weise (z.B. es wird ein anderes Zahlungsmittel verwendet oder es folgt keine Hängefahrt mehr) veränderter hat. Falls sich im Vergleich zu dem Zeitpunkt des Trainierens des Fahrassistenzsystems die Umgebung und/oder der Zustand des Kraftfahrzeugs in der vorbestimmter Weise geändert hat, wird das Fahrassistenzsystem entweder nicht verwendet oder es wird dem Fahrer während dem Durchfahren der Mautstelle die Steuerung der Querführung übergeben. Die gelernte bzw. hinterlegte Durchfahrungstrajektorie wird verworfen.

### Bezugszeichenliste

- 1: Kraftfahrzeug
- 2: Straße
- 3: Mautstelle
- 4 - 6: Durchfahrungen
- 7: vorausfahrendes Fahrzeug
- 8: Spurmarkierungen bzw. Fahrbahnmarkierungen

- S1 - S6: Verfahrensschritte

## Patentansprüche

1. Trainingsverfahren für ein Fahrassistenzsystem zur automatisierten Querführung eines Kraftfahrzeugs (1), wobei das Trainingsverfahren umfasst:
Aufzeichnen einer Trajektorie des Kraftfahrzeugs (1) bei einem Durchfahren eines Abschnitts (3) mit deaktiviertem Fahrassistenzsystem zur automatisierten Querführung, der von dem Fahrassistenzsystem zur automatisierten Querführung nicht bewältigbar ist, **dadurch gekennzeichnet, dass** es ferner umfasst:
Aufzeichnen einer weiteren Trajektorie eines weiteren Kraftfahrzeugs (7) bei dem Durchfahren des Abschnitts (3) mit deaktiviertem Fahrassistenzsystem zur automatisierten Querführung,
Plausibilisieren der Trajektorie des Kraftfahrzeugs (1) mit der Trajektorie des weiteren Kraftfahrzeugs (7), und
Trainieren des Fahrassistenzsystems zur automatisierten Querführung basierend auf der plausibilisierten Trajektorie des Kraftfahrzeugs (1) und der weiteren aufgezeichneten Trajektorie, sodass der Abschnitt (3) für das Fahrassistenzsystem zur automatisierten Querführung nach dem Trainieren bewältigbar ist.

2. Trainingsverfahren nach Anspruch 1, wobei das Trainingsverfahren umfasst:
Feststellen, dass der Abschnitt (3) auf einer geplanten Route des Kraftfahrzeugs in einem vorbestimmten Abstand zu dem Kraftfahrzeug (1) liegt, der von dem Fahrassistenzsystem zur automatisierten Querführung nicht bewältigbar ist,
Fahren des Kraftfahrzeugs (1) mit aktiviertem Fahrassistenzsystem zur automatisierten Querführung zu dem Zeitpunkt des Feststellens, dass der Abschnitt auf der geplanten Route des Kraftfahrzeugs (1) in dem vorbestimmten Abstand zu dem Kraftfahrzeug liegt, der von dem Fahrassistenzsystem zur automatisierten Querführung nicht bewältigbar ist, und
Deaktivieren des Fahrassistenzsystem zur automatisierten Querführung unter Ausgabe einer Übernahmeaufforderung mittels des Kraftfahrzeugs bevor der Abschnitt von dem Kraftfahrzeug (1) erreicht wird.

3. Trainingsverfahren nach einem der Ansprüche 1 bis 2, wobei das Trainieren des Fahrassistenzsystems zur automatisierten Querführung ein Festlegen einer Durchfahrtstrajektorie für den Abschnitt (3) ausgehend von einer ersten vorbestimmten Fahrspur zu einer zweiten vorbestimmten Fahrspur umfasst.

4. Verfahren zur Steuerung einer Querführung eines Kraftfahrzeugs unter Verwendung eines nach einem der Ansprüche 1 - 3 trainierten Fahrassistenzsystems.

5. Verfahren nach Anspruch 4, wobei vor und/oder während einem Durchfahren des Abschnitts (3) mittels dem Fahrassistenzsystem überprüft wird, ob sich im Vergleich zu einem Zeitpunkt des Trainierens des Fahrassistenzsystems eine Umgebung und/oder ein Zustand des Kraftfahrzeugs (1) in vorbestimmter Weise verändert hat, und falls sich im Vergleich zu dem Zeitpunkt des Trainierens des Fahrassistenzsystems die Umgebung und/oder der Zustand des Kraftfahrzeugs (1) in vorbestimmter Weise verändert hat, das Fahrassistenzsystem nicht verwendet wird.

6. System zur Datenverarbeitung, umfassend Mittel zur Ausführung des Verfahrens nach einem der Ansprüche 1 bis 5.

7. Computerprogramm, umfassend Befehle, die bei der Ausführung des Programms durch einen Computer diesen veranlassen, das Verfahren nach einem der Ansprüche 1 bis 5 auszuführen.

8. Computerlesbares Medium, umfassend Befehle, die bei der Ausführung durch einen Computer diesen veranlassen, das Verfahren nach einem der Ansprüche 1 bis 5 auszuführen.

## Claims

1. Training method for a driving assistance system for automated lateral guidance of a motor vehicle (1), wherein the training method comprises:
recording a trajectory of the motor vehicle (1) during a traversal of a section (3) with the driving assistance system for automated lateral guidance deactivated, which section is not manageable by the driving assistance system for automated lateral guidance, **characterized in that** it further comprises:
recording a further trajectory of a further motor vehicle (7) during the traversal of the section (3) with the driving assistance system for automated lateral guidance deactivated,
plausibility-checking the trajectory of the motor vehicle (1) with the trajectory of the further motor vehicle (7), and
training the driving assistance system for automated lateral guidance based on the plausibility-checked trajectory of the motor vehicle (1) and the further recorded trajectory, such that the section (3) is manageable by the driving assistance system for automated lateral guidance after the training.

2. Training method according to claim 1, wherein the training method comprises:
determining that the section (3) is located on a planned route of the motor vehicle at a predetermined distance from the motor vehicle (1), which section is not manageable by the driving assistance system for automated lateral guidance,
driving the motor vehicle (1) with the driving assistance system for automated lateral guidance activated at the point in time of determining that the section on the planned route of the motor vehicle (1) is located at the predetermined distance from the motor vehicle, which section is not manageable by the driving assistance system for automated lateral guidance, and
deactivating the driving assistance system for automated lateral guidance while outputting a takeover request by means of the motor vehicle before the section is reached by the motor vehicle (1).

3. Training method according to any one of claims 1 to 2, wherein the training of the driving assistance system for automated lateral guidance comprises establishing a traversal trajectory for the section (3) starting from a first predetermined lane to a second predetermined lane.

4. Method for controlling a lateral guidance of a motor vehicle using a driving assistance system trained according to any one of claims 1 to 3.

5. Method according to claim 4, wherein, before and/or during a traversal of the section (3), it is checked by means of the driving assistance system whether an environment and/or a state of the motor vehicle (1) has changed in a predetermined manner in comparison to a point in time of the training of the driving assistance system, and, if the environment and/or the state of the motor vehicle (1) has changed in a predetermined manner in comparison to the point in time of the training of the driving assistance system, the driving assistance system is not used.

6. System for data processing, comprising means for carrying out the method according to any one of claims 1 to 5.

7. Computer program comprising instructions which, when the program is executed by a computer, cause the computer to carry out the method according to any one of claims 1 to 5.

8. Computer-readable medium comprising instructions which, when executed by a computer, cause the computer to carry out the method according to any one of claims 1 to 5.

## Revendications

1. Procédé d'entraînement pour un système d'assistance à la conduite destiné au guidage latéral automatisé d'un véhicule automobile (1), le procédé d'entraînement comprenant:
l'enregistrement d'une trajectoire du véhicule automobile (1) lors d'un franchissement d'une section (3) avec le système d'assistance à la conduite destiné au guidage latéral automatisé désactivé, laquelle section ne peut pas être gérée par le système d'assistance à la conduite destiné au guidage latéral automatisé, **caractérisé en ce qu'**il comprend en outre:
l'enregistrement d'une trajectoire supplémentaire d'un véhicule automobile supplémentaire (7) lors du franchissement de la section (3) avec le système d'assistance à la conduite destiné au guidage latéral automatisé désactivé,
la vérification de plausibilité de la trajectoire du véhicule automobile (1) avec la trajectoire du véhicule automobile supplémentaire (7), et
l'entraînement du système d'assistance à la conduite destiné au guidage latéral automatisé sur la base de la trajectoire du véhicule automobile (1) dont la plausibilité a été vérifiée et de la trajectoire supplémentaire enregistrée, de sorte que la section (3) puisse être gérée par le système d'assistance à la conduite destiné au guidage latéral automatisé après l'entraînement.

2. Procédé d'entraînement selon la revendication 1, dans lequel le procédé d'entraînement comprend:
la détermination du fait que la section (3) se trouve sur un itinéraire planifié du véhicule automobile à une distance prédéterminée du véhicule automobile (1), laquelle section ne peut pas être gérée par le système d'assistance à la conduite destiné au guidage latéral automatisé,
la conduite du véhicule automobile (1) avec le système d'assistance à la conduite destiné au guidage latéral automatisé activé au moment de la détermination du fait que la section sur l'itinéraire planifié du véhicule automobile (1) se trouve à la distance prédéterminée du véhicule automobile, laquelle section ne peut pas être gérée par le système d'assistance à la conduite destiné au guidage latéral automatisé, et
la désactivation du système d'assistance à la conduite destiné au guidage latéral automatisé avec émission d'une demande de reprise en main au moyen du véhicule automobile avant que la section ne soit atteinte par le véhicule automobile (1).

3. Procédé d'entraînement selon l'une quelconque des revendications 1 à 2, dans lequel l'entraînement du système d'assistance à la conduite destiné au guidage latéral automatisé comprend l'établissement d'une trajectoire de franchissement pour la section (3) allant d'une première voie prédéterminée à une seconde voie prédéterminée.

4. Procédé de commande d'un guidage latéral d'un véhicule automobile utilisant un système d'assistance à la conduite entraîné selon l'une quelconque des revendications 1 à 3.

5. Procédé selon la revendication 4, dans lequel, avant et/ou pendant un franchissement de la section (3), il est vérifié au moyen du système d'assistance à la conduite si un environnement et/ou un état du véhicule automobile (1) s'est modifié de manière prédéterminée par rapport à un moment de l'entraînement du système d'assistance à la conduite, et, si l'environnement et/ou l'état du véhicule automobile (1) s'est modifié de manière prédéterminée par rapport au moment de l'entraînement du système d'assistance à la conduite, le système d'assistance à la conduite n'est pas utilisé.

6. Système de traitement de données, comprenant des moyens pour mettre en œuvre le procédé selon l'une quelconque des revendications 1 à 5.

7. Programme d'ordinateur comprenant des instructions qui, lorsque le programme est exécuté par un ordinateur, conduisent celui-ci à mettre en œuvre le procédé selon l'une quelconque des revendications 1 à 5.

8. Support lisible par ordinateur comprenant des instructions qui, lorsqu'elles sont exécutées par un ordinateur, conduisent celui-ci à mettre en œuvre le procédé selon l'une quelconque des revendications 1 à 5.
